# EUROPEAN PATENT SPECIFICATION

(11) **EP 2 922 277 B1**
(45) Date of publication and mention of the grant of the patent: **26.07.2017**
(21) Application number: 15159162.5
(22) Date of filing: 16.03.2015
(51) Int. Cl.: H04L 29/08, H04N 21/4227, H04N 21/485, H04M 1/725, H04N 21/41, H04N 21/422, H04N 21/4725, H04N 21/81

(54) **Method and device for remote control of a set top box**
Verfahren und Vorrichtung zur Fernsteuerung einer Set-Top-Box
Procédé et dispositif de commande à distance d'un boîtier décodeur

(30) Priority: 17.03.2014 CN 201410098840
(43) Date of publication of application: 23.09.2015
(73) Proprietor: Huawei Technologies Co., Ltd., Longgang District Shenzhen, Guangdong 518129 (CN)
(72) Inventor: Wang, Heming, 518129 Shenzhen (CN)
(74) Representative: Gill Jennings & Every LLP

(56) References cited:
- WO-A2-2010/098591
- CN-A- 102 595 226
- DE-A1- 10 310 746
- US-A1- 2012 084 662

## Description

### TECHNICAL FIELD

Embodiments of the present invention relate to communications technologies, and in particular, to a terminal remote control method, a set top box, a mobile terminal, and a web page server.

### BACKGROUND

With development of science and technology, people can perform remote control on a set top box or a television by using a handheld terminal, such as a mobile phone.

In the prior art, a set top box of a television performs screen capturing on video content of the television, a handheld terminal acquires the video content, and a remote control unit of a remote control system in the handheld terminal decodes the video content to obtain a decoding stream, and then the handheld terminal analyzes the decoding stream and generates a television control interface on the handheld terminal, so as to perform operation on the television.

However, in the prior art, the terminal at least has functions of decoding video content and performing real-time information processing, and therefore, a low-end terminal without these functions cannot perform remote control on a television or a set top box.

Chinese Patent Application, numbered CN102595226, provides a method for wireless controlling set top box.

US Patent Application, numbered US20120084662A, provides a system for controlling a networked display. And German Patent application, numbered DE 10310746A1, refers for similar system as the Uspatent application.

PCT application, numbered WO 2010/098591, provides a remote user interface system.

### SUMMARY

Embodiments of the present invention provide a terminal remote control method and a set top box so as to solve a problem that a low-end terminal performs remote control on a television or a set top box.

A first aspect of the embodiments of the present invention provides a terminal remote control method according to claim 1. According to the first aspect of the invention, before the sending, by a set top box, application information to a mobile terminal, the method includes:
generating, by the set top box, the control UI by using a web page description language; and
sending, by the set top box, information about the control UI to the web page server, so as to enable the web page server to provide the control UI for the mobile terminal.

With reference to the first aspect, in a first possible implementation manner, the set top box sends the application information to the mobile terminal in a broadcast manner. In a second possible implementation manner, after the sending, by a set top box, application information to a mobile terminal, the method further includes:
sending, by the set top box, an application update message to the mobile terminal, where the application update message is used to update at least one of the address information of the control UI and the connection information.

A second aspect of the embodiments of the present invention provides a set top box according to claim 4. According to the second aspect of the invention, the processing module is configured to generate the control UI by using a web page description language; and
the sending module is further configured to send information about the control UI to the web page server, so as to enable the web page server to provide the control UI for the mobile terminal.

With reference to the second aspect, in a first possible implementation manner, the sending module is further configured to send the application information to the mobile terminal in a broadcast manner. According to a second possible implementation manner of the second aspect, the sending module is further configured to send an application update message to the mobile terminal, where the application update message is used to update at least one of the address information of the control UI and the connection information.

According to the terminal remote control method and the set top box provided in the present invention, a set top box sends application information to a mobile terminal, where the application information is used to instruct the mobile terminal to acquire, by using a web page server, a control user interface UI for remote control on the set top box, the application information carries address information of the control UI and connection information that is required by the mobile terminal for establishing a connection to the set top box by using the web page server, and the application information is information edited by using a web page description language; the set top box receives an operation instruction that is sent by the mobile terminal on the control UI by using the web page server; and then the set top box performs an operation according to the operation instruction. Therefore, a remote control operation performed by the mobile terminal on the set top box is implemented, and the mobile terminal merely needs to parse information edited in a web page description language, but does not need to decode video content of a television, which has a relatively low requirement for the mobile terminal, thereby implementing remote control on a set top box by using a low and middle-end smart mobile terminal.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a terminal remote control method according to an example method;
FIG. 2 is a schematic flowchart of another terminal remote control method according to an embodiment of the present invention; example
FIG. 3 is a schematic flowchart of still example terminal remote control method;
FIG. 4 is a schematic structural diagram of a set top box according to an embodiment of the present invention;
FIG. 5 is a schematic structural diagram of an example mobile terminal;
FIG. 6 is a schematic structural diagram of another example mobile terminal;
FIG. 7 is a schematic flowchart of yet another example terminal remote control method;
FIG. 8 is a schematic structural diagram of an example web page server; and
FIG. 9 is a schematic structural diagram of another example mobile terminal.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

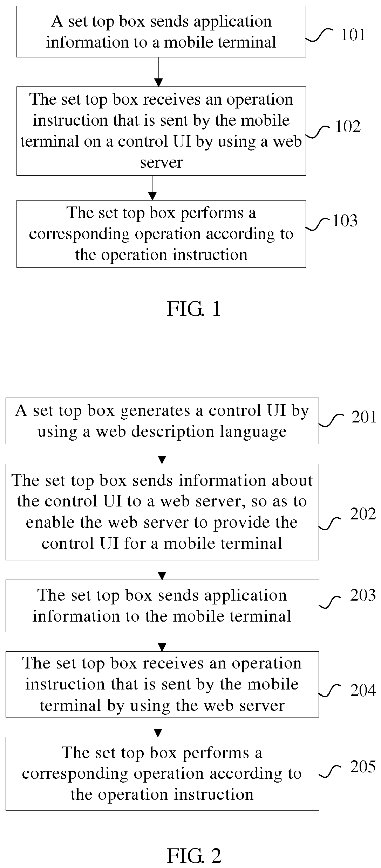

FIG. 1 is a schematic flowchart of a terminal remote control method according to an example. As shown in FIG. 1, the terminal remote control method includes:
Step 101: A set top box sends application information to a mobile terminal.
   Specifically, after the set top box is started, the set top box may send the application information to the mobile terminal. For example, after the set top box is started, the set top box may send the application information to all networked mobile terminals in a home local area network in a broadcast manner, where the application information is information edited by using a web page description language. For example, the application information is information edited by the set top box by using a Hypertext Markup Language, such as HTML.5, or the application information is information edited by the set top box by using an Extensible Markup Language, such as XML.
   In this example, the application information is used to instruct the mobile terminal to acquire, by using a web page server, a control user interface UI for remote control on the set top box, where the control UI may include operation buttons for performing fast forwarding, pausing, replaying, and the like on the set top box. The application information carries address information of the control UI and connection information that is required by the mobile terminal for establishing a connection to the set top box by using the web page server, where the mobile terminal may be a smartphone, a handheld computer, or the like.
   It should be noted that the set top box may send the application information to the mobile terminal in a broadcast manner, that is, a broadcast server may be additionally disposed in an existing set top box, so that the set top box broadcasts the application information to the mobile terminal.
   For example, the set top box may send the application information to all networked mobile terminals in a home local area network by using IPv4 or IPv6. To broadcast the application information, the set top box may send a message to an address 224.0.0.1 in an IPv4 scenario, and send a message to ff02::1 in an IPv6 scenario.
Step 102: The set top box receives an operation instruction that is sent by the mobile terminal on a control UI by using a web page server.
Step 103: The set top box performs an operation according to the operation instruction.

For example, the operation instruction is a pause instruction, after receiving the instruction sent by the mobile terminal, the set top box performs a pausing operation on a television connected to the set top box.

In this example, a set top box sends application information to a mobile terminal, where the application information is used to instruct the mobile terminal to acquire, by using a web page server, a control user interface UI for remote control on the set top box, the application information carries address information of the control UI and connection information that is required by the mobile terminal for establishing a connection to the set top box by using the web page server, and the application information is information edited by using a web page description language; the set top box receives an operation instruction that is sent by the mobile terminal on the control UI by using the web page server, and then the set top box performs an operation according to the operation instruction. Therefore, a remote control operation performed by the mobile terminal on the set top box is implemented, and the mobile terminal only needs to parse information edited by using a web page description language, but does not need to decode video content of a television, which has a relatively low requirement for the mobile terminal, thereby implementing remote control on a set top box by using a low and middle-end smart mobile terminal.

FIG. 2 is a schematic flowchart of a terminal remote control method according to an embodiment of the present invention. As shown in FIG. 2, the terminal remote control method includes:
Step 201: A set top box generates a control UI by using a web page description language.
   Specifically, after the set top box is started, the set top box may generate the control UI by using the web page description language. It should be noted that if in a last startup process, the set top box has generated a UI and temporarily stored the UI in the set top box, the set top box may not generate a UI in a current startup process but directly performs step 202.
   Specifically, the set top box generates the control UI by using the web page description language. For example, if an Android application system is configured for the set top box, the Android application system may construct a corresponding UI under HTML. 5 according to need, namely, a function of the set top box.
Step 202: The set top box sends information about the control UI by using a web page server, so as to enable the web page server to provide the control UI for a mobile terminal.
   In this embodiment, the web page server is a network element that forwards an operation instruction to the mobile terminal, where the operation instruction is sent by the set top box.
Step 203: The set top box sends application information to the mobile terminal.
   In this embodiment, the application information is information edited by using the web page description language, for example, the application information is information edited by the set top box by using a Hypertext Markup Language, such as HTML.5, or information edited by the set top box by using an Extensible Markup Language, such as XML. The application information is used to instruct the mobile terminal to acquire the control user interface UI for remote control on the set top box. The application information carries address information of the control UI, and information that is required for establishing a connection to the set top box, and the mobile terminal may be a smartphone, a handheld computer, or the like.
   For example, the set top box may send the application information to all networked mobile terminals in a home local area network by using IPv4 or IPv6. To broadcast the application information, the set top box may send a message to an address 224.0.0.1 in an IPv4 scenario, and send a message to ff02::1 in an IPv6 scenario.
   It should be noted that a sequence of step 202 and step 203 is not limited in this embodiment.
Step 204: The set top box receives an operation instruction that is sent by the mobile terminal by using the web page server.
Step 205: The set top box performs a corresponding operation according to the operation instruction.

In this embodiment, the set top box automatically generates the control UI by using the web page description language, that is, the set top box may generate, according to a function of the set top box, the control UI. Therefore, it is implemented that a user performs remote control on the set top box by using the mobile terminal more conveniently.

Further, on a basis of the foregoing embodiment, the terminal remote control method may further include:
the set top box sends an application update message to the mobile terminal, where the application update message is used to update at least one of the address information of the control UI and the connection information.

Specifically, when an application system of the set top box changes, a new control UI needs to be generated. For example, when the Android application system of the set top box changes, the Android application system may send a new control UI update message through a broadcast channel, so as to update the control UI of the set top box on the mobile terminal.

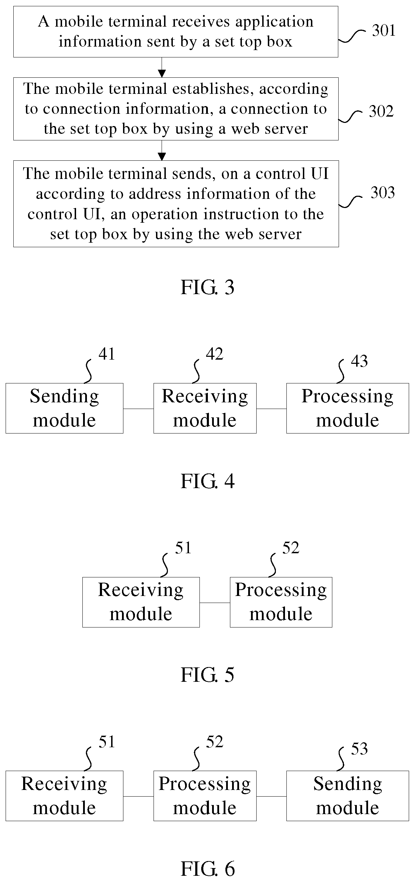

FIG. 3 is a schematic flowchart of still another terminal remote control method according to another example. As shown in FIG. 3, the terminal remote control method includes:
Step 301: A mobile terminal receives application information sent by a set top box.
   In this embodiment, the application information is used to instruct the mobile terminal to obtain, by using a web page server, a control user interface UI for remote control on the set top box, where the application information carries address information of the control user interface UI and connection information that is required by the mobile terminal for establishing a connection to the set top box by using the web page server, and the application information is information edited by using a web page description language.
Step 302: The mobile terminal establishes, according to connection information, a connection to the set top box by using a web page server.
   Specifically, the mobile terminal establishes, according to the connection information, namely, the information that is required for establishing the connection to the set top box by the mobile terminal by using the web page server, the connection to the set top box by using the web page server.
Step 303: The mobile terminal sends, on the control UI according to address information of a control UI, an operation instruction to the set top box by using the web page server.

For example, the mobile terminal needs to monitor broadcast information. When receiving the application information sent by the set top box in a broadcast manner, the mobile terminal may parse information about the control UI in the application information, for example, parse HTML. 5 web page information, and then send the HTML. 5 web page information to an HTML.5 browser. Therefore, the HTML.5 browser establishes a connection to the set top box and communicates, so that it may be implemented that the mobile terminal sends control information to the set top box.

In this example, the mobile terminal is only required to have functions of monitoring and parsing the broadcast information, so there is no additional requirement for the mobile terminal on decoding video content and performing real-time information processing. Therefore, a developer may develop a universal IOS and a universal Android application for a mobile terminal to perform downloading.

Further, on a basis of the foregoing example, after step 301, the terminal remote control method may further include:
the mobile terminal receives an application update message sent by the set top box, where the application update message is used to update at least one of the address information of the control UI and the connection information.

Specifically, the application information carries information about the connection to the set top box, where the connection information includes the address information of the set top box, and configuration information that is used by the mobile terminal to establishing the connection to the set-top box. Therefore, the mobile terminal may establish, on a web page, a TCP (Transmission Control Protocol) connection to the set top box by using WebSocket (namely, a web page server).

The mobile terminal sends an operation instruction to the set top box by using the web page server, so as to enable the set top box to perform an operation according to the operation instruction.

It should be noted that, in the foregoing example, the set top box generates the control UI by using a web page description language. For example, the set top box constructs a corresponding UI under HTML.5 according to a function of the set top box, and may also constructs an XML file that is edited by using XML. That is, the mobile terminal has functions of parsing and displaying XML, and then remote control on the set top box may be implemented.

On a basis of the foregoing example, after receiving the application information sent by the set top box, the mobile terminal acquires, by using the web page server, the control UI for the remote control on the set top box, and sends, on the control UI, the operation instruction to the set top box by using the web page server.

FIG. 4 is a schematic structural diagram of a set top box according to an embodiment of the present invention. As shown in FIG. 4, the set top box includes a sending module 41, a receiving module 42 and a processing module 43, where
the sending module 41 is configured to send application information to a mobile terminal, where the application information is used to instruct the mobile terminal to acquire, by using a web page server, a control user interface UI for remote control on the set top box, the application information carries address information of the control UI and connection information that is required by the mobile terminal for establishing a connection to the set top box by using the web page server, and the application information is information edited by using a web page description language;
the receiving module 42 is configured to receive an operation instruction that is sent by the mobile terminal on the control UI by using the web page server; and
the processing module 43 is configured to perform an operation according to the operation instruction.

In this embodiment, a set top box sends application information to a mobile terminal, where the application information is used to instruct the mobile terminal to acquire, by using a web page server, a control user interface UI for remote control on the set top box, the application information carries address information of the control UI and connection information that is required by the mobile terminal for establishing a connection to the set top box by using the web page server, and the application information is information edited by using a web page description language; the set top box receives an operation instruction that is sent by the mobile terminal on the control UI by using the web page server; and then the set top box performs an operation according to the operation instruction. Therefore, a remote control operation performed by the mobile terminal on the set top box is implemented, and the mobile terminal only needs to parse information edited by using a web page description language, but does not need to decode video content of a television, which has a relatively low requirement for the mobile terminal, thereby implementing remote control on a set top box by using a low and middle-end smart mobile terminal.

On a basis of the foregoing embodiment, the processing module 43 is further configured to generate the control UI by using a web page description language.

The sending module 41 is further configured to send information about the control UI to the web page server, so as to enable the web page server to provide the control UI for the mobile terminal.

Further, on the basis of the foregoing embodiment, the sending module 41 is further configured to send the application information to the mobile terminal in a broadcast manner.

On the basis of the foregoing embodiment, the sending module 41 is further configured to send an application update message to the mobile terminal, where the application update message is used to update at least one of the address information of the control UI and the connection information.

For a specific function of each module in the set top box, reference may be made to description of the foregoing method embodiments.

FIG. 5 is a schematic structural diagram of a mobile terminal according to an example. As shown in FIG. 5, the mobile terminal includes a receiving module 51 and a processing module 52, where
the receiving module 51 is configured to receive application information sent by a set top box, where the application information is used to instruct the mobile terminal to obtain, by using a web page server, a control user interface UI for remote control on the set top box, and the application information carries address information of the control user interface UI and connection information that is required by the mobile terminal for establishing a connection to the set top box by using the web page server; and
the processing module 52 is configured to establish, according to the connection information, the connection to the set top box by using the web page server, and send, on the control UI according to the address information of the control UI, an operation instruction to the set top box by using the web page server.

In this example, a mobile terminal receives application information sent by a set top box, where the application information is used to instruct the mobile terminal to acquire a control user interface UI for remote control on the set top box, the application information carries information about the control UI and connection information that is required by the mobile terminal for establishing a connection to the set top box by using the web page server; then establishes, according to the connection information, the connection to the set top box by using the web page server; and then sends, on the control UI according to address information of the control UI, an operation instruction to the set top box by using the web page server, so that a relatively low-end mobile terminal can perform remote control on a set top.

On a basis of the foregoing example, the receiving module 51 is further configured to receive the application update message sent by the set top box, where the application update message is used to update at least one of the address information of the control UI and the connection information.

FIG. 6 is a schematic structural diagram of another mobile terminal according to an example. As shown in FIG. 6, on a basis of the foregoing example, the mobile terminal may further include a sending module 53, where
the sending module 53 is configured to: after the application information sent by the set top box is received, acquire, by using the web page server, the control UI for remote control on the set top box, and send, on the control UI, an operation instruction to the set top box by using the web page server.

For a specific function of each module in the mobile terminal in FIG. 5 or in FIG. 6, reference may be made to description of the foregoing method embodiments.

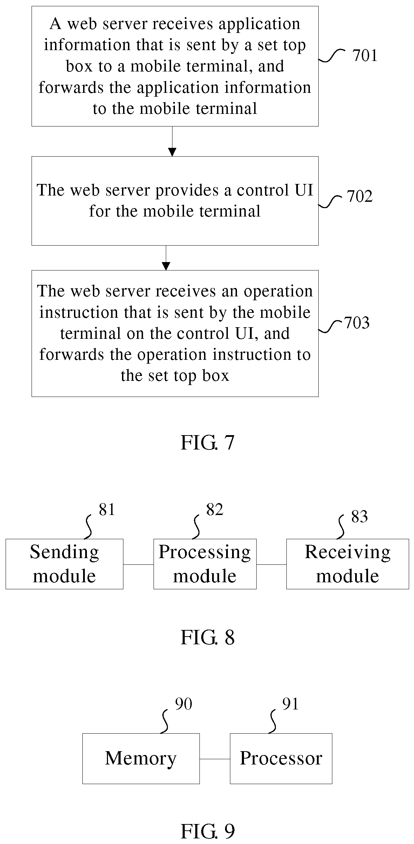

FIG. 7 is a schematic flowchart of still another terminal remote control method according to an example. As shown in FIG. 7, the terminal remote control method includes:
Step 701: A web page server receives application information that is sent by a set top box to a mobile terminal, and forwards the application information to the mobile terminal.
   The application information in this example is used to instruct the mobile terminal to acquire, by using the web page server, a control user interface UI for remote control on the set top box, the application information carries address information of the control UI and connection information that is required by the mobile terminal for establishing a connection to the set top box by using the web page server, and the application information is information edited by using a web page description language.
Step 702: The web page server provides a control UI for the mobile terminal.
Step 703: The web page server receives an operation instruction that is sent by the mobile terminal on the control UI, and forwards the operation instruction to the set top box.

In this example, a web page server receives application information that is sent by a set top box to a mobile terminal, and forwards the application information to the mobile terminal; the web page server provides the control UI for the mobile terminal; and then the web page server receives an operation instruction that is sent by the mobile terminal on the control UI, and forwards the operation instruction to the set top box. Therefore, a remote control operation performed by the mobile terminal on the set top box is implemented, and the mobile terminal only needs to parse information edited in a web page description language, but does not need to decode video content of a television, which has a relatively low requirement for the mobile terminal, thereby implementing remote control on a set top box by using a low and middle-end smart mobile terminal.

On a basis of the foregoing example, before step 701, the terminal remote control method may further include:
the web page server receives information about the control UI sent by the set top box.

In this example, the web page server is a network element that forwards an operation instruction to the mobile terminal, where the operation instruction is sent by the set top box.

Further, on the basis of the foregoing example, that the web page server provides a control UI for the mobile terminal may include that:
the web page server provides the control UI for the mobile terminal according to the information about the control UI.

On the basis of the foregoing example, after the web page server receives the application information that is sent by the set top box to the mobile terminal, and forwards the application information to the mobile terminal, the terminal remote control method may further include:
the web page server receives an application update message sent by the set top box, and forwards the application update message to the mobile terminal, where the application update message is used to update at least one of the address information of the control UI and the connection information.

FIG. 8 is a schematic structural diagram of a web page server according to an example. As shown in FIG. 8, the web page server includes a sending module 81, a processing module 82, and a receiving module 83, where
the sending module 81 is configured to receive application information sent by a set top box to a mobile terminal, and forward the application information to the mobile terminal, where the application information is used to instruct the mobile terminal to acquire, by using the web page server, a control user interface UI for remote control on the set top box, the application information carries address information of the control UI and connection information that is required by the mobile terminal for establishing a connection to the set top box by using the web page server, and the application information is information edited by using a web page description language; and receive an operation instruction sent by the mobile terminal;
the processing module 82 is configured to provide the control UI for the mobile terminal; and
the receiving module 83 is configured to receive the operation instruction that is sent by the mobile terminal on the control UI, and forward the operation instruction to the set top box.

In this example, a web page server receives application information that is sent by a set top box to a mobile terminal, and forwards the application information to the mobile terminal, then provides the control UI for the mobile terminal; and then, the web page server receives an operation instruction that is sent by the mobile terminal on the control UI, and forwards the operation instruction to the set top box. Therefore, a remote control operation performed by the mobile terminal on the set top box is implemented, and the mobile terminal only needs to parse information edited by using a web page description language, but does not need to decode video content of a television, which has a relatively low requirement for the mobile terminal, thereby implementing remote control on a set top box by using a low and middle-end smart mobile terminal.

On a basis of the foregoing example, the receiving module 83 is further configured to receive information about the control UI sent by the set top box.

The processing module 82 is specifically configured to provide the control UI for the mobile terminal according to the information about the control UI.

Further, on the basis of the foregoing example, the sending module 81 is further configured to receive an application update message sent by the set top box, and forward the application update message to the mobile terminal, where the application update message is used to update at least one of the address information of the control UI and the connection information.

For a specific function of each module in the web page server, reference may be made to description of the foregoing method embodiments.

According to description of the foregoing implementation manners, persons skilled in the art can clearly understand that each implementation manner may be implemented by using software in addition to a necessary hardware platform, and definitely may also be implemented by using hardware. Based on such an understanding, the foregoing technical solutions essentially, or the part contributing to the prior art may be implemented in a form of a software product. The computer software product may be stored in a readable storage medium of a computer, such as a ROM/RAM, a magnetic disk, and an optical disk, and includes several instructions for instructing a computer device (which may be a personal computer, a server, a network device, or the like) to perform each embodiment or the methods described in some parts of the embodiments.

Further, the methods and solutions in the embodiments of the present invention are implemented in the form of the software product and stored in the readable storage medium of the computer, and may be also invoked by a processor unit simultaneously. FIG. 9 is a schematic structural diagram of another mobile terminal according to an example. As shown in FIG. 9, the schematic structural diagram of the terminal provided in this example corresponds to the method provided in the method embodiments, where the terminal includes a memory 90, configured to store information about a procedure; and a processor 91, connected to the memory 90 and configured to control execution of the procedure. The procedure may include: sending application information to the mobile terminal, where the application information is used to instruct the mobile terminal to acquire, by using a web page server, a control user interface UI for remote control on a set top box, the application information carries address information of the control UI and connection information that is required by the mobile terminal for establishing a connection to the set top box by using the web page server, and the application information is information edited by using a web page description language; receiving an operation instruction that is sent by the mobile terminal on the control UI by using the web page server; and performing an operation according to the operation instruction.

The procedure may also include: receiving application information sent by a set top box, where the application information is used to instruct the mobile terminal to acquire, by using a web page server, a control user interface UI for remote control on the set top box, the application information carries address information of the control user interface UI and connection information that is required by the mobile terminal for establishing a connection to the set top box by using the web page server, and the application information is information edited by using a web page description language; establishing, based on the connection information, the connection to the set top box by using the web page server; and sending, on the control UI according to the address information of the control UI, an operation instruction to the set top box by using the web page server.

The procedure may also include: receiving application information that is sent by a set top box to the mobile terminal, and forwarding the application information to the mobile terminal, where the application information is used to instruct the mobile terminal to acquire, by using a web page server, a control user interface UI for remote control on the set top box, the application information carries address information of the control UI and connection information that is required by the mobile terminal for establishing a connection to the set top box by using the web page server, and the application information is information edited by using a web page description language; providing the control UI for the mobile terminal; and receiving an operation instruction that is sent by the mobile terminal on the control UI, and forwarding the operation instruction to the set top box.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments, without departing from the scope of the claims.

## Claims

1. A terminal remote control method, comprising:
generating (201), by a set top box, a control user interface UI by using a web page description language; and
sending (202), by the set top box, information about the control UI to a web page server, so as to enable the web page server to provide the control UI for a mobile terminal;
sending (101), by the set top box, application information to the mobile terminal, wherein the application information is used to instruct the mobile terminal to acquire, by using the web page server, the control UI for remote control on the set top box, the application information carries address information of the control UI and connection information that is required by the mobile terminal for establishing a connection to the set top box by using the web page server, and the application information is information edited by using a web page description language;
receiving (102), by the set top box, an operation instruction that is sent by the mobile terminal on the control UI by using the web page server; and
performing (103), by the set top box, an operation according to the operation instruction.

2. The method according to claim 1, wherein the set top box sends the application information to the mobile terminal in a broadcast manner.

3. The method according to claim 1 or 2, after the sending, by a set top box, application information to a mobile terminal, further comprising:
sending, by the set top box, an application update message to the mobile terminal, wherein the application update message is used to update at least one of the address information of the control UI and the connection information.

4. A set top box, comprising:
a sending module (41), configured to send application information to a mobile terminal, wherein the application information includes information to instruct the mobile terminal to acquire, by using a web page server, a control user interface UI for remote control on the set top box, the application information carries address information of the control UI and connection information that is required by the mobile terminal for establishing a connection to the set top box by using the web page server, and the application information is information edited by using a web page description language;
a receiving module (42), configured to receive an operation instruction that is sent by the mobile terminal on the control UI by using the web page server; and
a processing module (43), configured to perform an operation according to the operation instruction,
wherein the processing module is further configured to generate the control UI by using the web page description language, and
the sending module is further configured to send information about the control UI to the web page server, so as to enable the web page server to provide the control UI for the mobile terminal.

5. The set top box according to claim 4, wherein the sending module is further configured to send the application information to the mobile terminal in a broadcast manner.

6. The set top box according to claim 4 or 5, wherein the sending module is further configured to send an application update message to the mobile terminal, wherein the application update message includes a message to update at least one of the address information of the control UI and the connection information.

## Patentansprüche

1. Verfahren zur Fernsteuerung eines Endgeräts, umfassend:
Erzeugen (201) durch eine Set-Top-Box einer Steuerungs-Benutzerschnittstelle UI durch Verwenden einer Webseitenbeschreibungssprache; und
Senden (202) durch die Set-Top-Box von Informationen über die Steuerungs-UI an einen Webseitenserver, um den Webseitenserver zu befähigen, die Steuerungs-UI für ein mobiles Endgerät bereitzustellen;
Senden (101) durch die Set-Top-Box von Anwendungsinformationen an das mobile Endgerät, wobei die Anwendungsinformationen verwendet werden, um das mobile Endgerät anzuweisen, die Steuerungs-UI zur Fernsteuerung auf der Set-Top-Box durch Verwenden des Webseitenservers abzurufen, die Anwendungsinformationen Adressinformationen der Steuerungs-UI und Verbindungsinformationen mitführen, die vom mobilen Endgerät zum Herstellen einer Verbindung mit der Set-Top-Box durch Verwenden des Webseitenservers benötigt werden, und die Anwendungsinformationen Informationen sind, die durch Verwenden einer Webseitenbeschreibungssprache bearbeitet werden;
Empfangen (102) durch die Set-Top-Box einer Betriebsanweisung, die vom mobilen Endgerät auf der Steuerungs-UI durch Verwenden des Webseitenservers gesendet wird; und
Durchführen (103) durch die Set-Top-Box eines Betriebs gemäß der Betriebsanweisung.

2. Verfahren nach Anspruch 1, wobei die Set-Top-Box die Anwendungsinformationen auf eine Broadcast-Weise an das mobile Endgerät sendet.

3. Verfahren nach Anspruch 1 oder 2, ferner umfassend nach dem Senden von Anwendungsinformationen durch eine Set-Top-Box an ein mobiles Endgerät:
Senden durch die Set-Top-Box einer Anwendungsaktualisierungsnachricht an das mobile Endgerät, wobei die Anwendungsaktualisierungsnachricht zum Aktualisieren mindestens einer der Adressinformationen der Steuerungs-UI und der Verbindungsinformationen verwendet wird.

4. Set-Top-Box, umfassend:
eine Sendemodul (41), das so konfiguriert ist, dass es Anwendungsinformationen an ein mobiles Endgerät sendet, wobei die Anwendungsinformationen Informationen umfassen, um das mobile Endgerät anzuweisen, eine Steuerungs-Benutzerschnittstelle UI zur Fernsteuerung auf der Set-Top-Box durch Verwenden eines Webseitenservers abzurufen, die Anwendungsinformationen Adressinformationen der Steuerungs-UI und Verbindungsinformationen mitführen, die vom mobilen Endgerät zum Herstellen einer Verbindung mit der Set-Top-Box durch Verwenden des Webseitenservers benötigt werden, und die Anwendungsinformationen Informationen sind, die durch Verwenden einer Webseitenbeschreibungssprache bearbeitet werden;
ein Empfangsmodul (42), das so konfiguriert ist, dass es eine Betriebsanweisung empfängt, die vom mobilen Endgerät auf der Steuerungs-UI durch Verwenden des Webseitenservers gesendet wird; und
ein Verarbeitungsmodul (43), das so konfiguriert ist, dass es einen Betrieb gemäß der Betriebsanweisung durchführt,
wobei das Verarbeitungsmodul ferner so konfiguriert ist, dass es die Steuerungs-UI durch Verwenden der Webseitenbeschreibungssprache erzeugt; und
das Sendemodul ferner so konfiguriert ist, dass es Informationen über die Steuerungs-UI an den Webseitenserver sendet, um den Webseitenserver zu befähigen, die Steuerungs-UI für das mobile Endgerät bereitzustellen.

5. Set-Top-Box nach Anspruch 4, wobei das Sendemodul ferner so konfiguriert ist, dass es die Anwendungsinformationen auf eine Broadcast-Weise an das mobile Endgerät sendet.

6. Set-Top-Box nach Anspruch 4 oder 5, wobei das Sendemodul ferner so konfiguriert ist, dass es eine Anwendungsaktualisierungsnachricht an das mobile Endgerät sendet, wobei die Anwendungsaktualisierungsnachricht eine Nachricht zum Aktualisieren mindestens einer der Adressinformationen der Steuerungs-UI und der Verbindungsinformationen umfasst.

## Revendications

1. Procédé de commande à distance de terminal, comprenant les étapes suivantes :
générer (201), par un boîtier décodeur, une interface utilisateur UI de commande en utilisant un langage de description de page Web ; et
envoyer (202), par le boîtier décodeur, des informations concernant l'UI de commande à un serveur de pages Web, pour permettre au serveur de pages Web de fournir l'UI de commande à un terminal mobile ;
envoyer (101), par le boîtier décodeur, des informations d'application au terminal mobile, les informations d'application étant utilisées pour ordonner au terminal mobile d'acquérir, en utilisant le serveur de pages Web, l'UI de commande pour une commande à distance du boîtier décodeur, les informations d'application contenant des informations d'adresse de l'UI de commande et des informations de connexion qui sont requises par le terminal mobile pour établir une connexion avec le boîtier décodeur en utilisant le serveur de pages Web, et les informations d'application étant des informations éditées en utilisant un langage de description de page Web ;
recevoir (102), par le boîtier décodeur, une instruction d'opération qui est envoyée par le terminal mobile sur l'UI de commande en utilisant le serveur de pages Web ; et
exécuter (103), par le boîtier décodeur, une opération selon l'instruction d'opération.

2. Procédé selon la revendication 1, dans lequel le boîtier décodeur envoie les informations d'application au terminal mobile dans une diffusion.

3. Procédé selon la revendication 1 ou 2, après l'étape consistant à envoyer, par un boîtier décodeur, des informations d'application à un terminal mobile, comprenant en outre :
envoyer, par le boîtier décodeur, un message de mise à jour d'application au terminal mobile, le message de mise à jour d'application étant utilisé pour mettre à jour au moins un élément parmi les informations d'adresse de l'UI de commande et les informations de connexion.

4. Boîtier décodeur, comprenant :
un module d'envoi (41), configuré pour envoyer des informations d'application à un terminal mobile, les informations d'application comportant des informations ordonnant au terminal mobile d'acquérir, en utilisant un serveur de pages Web, une interface utilisateur UI de commande pour une commande à distance du boîtier décodeur, les informations d'application contenant des informations d'adresse de l'UI de commande et des informations de connexion qui sont requises par le terminal mobile pour établir une connexion avec le boîtier décodeur en utilisant le serveur de pages Web, et les informations d'application étant des informations éditées en utilisant un langage de description de pages Web ;
un module de réception (42), configuré pour recevoir une instruction d'opération qui est envoyée par le terminal mobile sur l'UI de commande en utilisant le serveur de pages Web ; et
un module de traitement (43), configuré pour exécuter une opération selon l'instruction d'opération,
le module de traitement étant en outre configuré pour générer l'UI de commande en utilisant le langage de description de page Web, et
le module d'envoi étant en outre configuré pour envoyer des informations concernant l'UI de commande au serveur de pages Web, pour permettre au serveur de pages Web de fournir l'UI de commande au terminal mobile.

5. Boîtier décodeur selon la revendication 4, dans lequel le module d'envoi est en outre configuré pour envoyer les informations d'application au terminal mobile dans une diffusion.

6. Boîtier décodeur selon la revendication 4 ou 5, dans lequel le module d'envoi est en outre configuré pour envoyer un message de mise à jour d'application au terminal mobile, le message de mise à jour d'application comportant un message de mise à jour d'au moins un élément parmi les informations d'adresse de l'UI de commande et les informations de connexion.
